# EUROPÄISCHE PATENTSCHRIFT

(11) **EP 3 384 231 B1**
(45) Veröffentlichungstag und Bekanntmachung des Hinweises auf die Patenterteilung: **02.02.2022**
(21) Anmeldenummer: 16812706.6
(22) Anmeldetag: 07.12.2016
(51) Int. Cl.: F01D 25/28, G01B 5/00, G01B 11/24, G01B 21/04

(54) **3D-MESSUNG VON LÄNGLICHEN AUSNEHMUNGEN, INSBESONDERE NUTEN**
3-D MEASUREMENT OF ELONGATE CUT-OUTS, IN PARTICULAR GROOVES
MESURE 3D DE CAVITÉS ALLONGÉES, NOTAMMENT DE RAINURES

(30) Priorität: 30.03.2016 DE 102016205217
(43) Veröffentlichungstag der Anmeldung: 10.10.2018
(73) Patentinhaber: Siemens Energy Global GmbH & Co. KG, 81739 München (DE)
(72) Erfinder: KÖRDEL, Martin, 28209 Charlotte (US); EULER, Helmuth, 85625 Glonn (DE); HEINE, Wolfgang, 82008 Unterhaching (DE); GERGEN, Werner, 85609 Aschheim (DE); PHILIPPI, Uwe, 83052 Bruckmühl (DE); SCHICK, Anton, 84149 Velden (DE)
(86) Internationale Anmeldenummer: PCT/EP2016/080093
(87) Internationale Veröffentlichungsnummer: WO 2017/167413

(56) Entgegenhaltungen:
- EP-A1- 1 568 439
- EP-A2- 1 416 122
- WO-A1-2012/069154
- WO-A1-2015/014652
- US-A1- 2015 308 813

## Beschreibung

Die Erfindung betrifft eine 3D-Messvorrichtung und ein Verfahren zur dreidimensionalen Erfassung von länglichen Ausnehmungen, insbesondere Nuten, insbesondere Rotornuten.

Bei Servicearbeiten ist eine optische Inspektion und 3D-Vermessung von länglichen Ausnehmungen, insbesondere Nuten, insbesondere von Gasturbinenrotornuten, erforderlich, wobei insbesondere gerade Nutenverläufe sichergestellt werden müssen. Nuten unterliegen im laufenden Betrieb einer Abnutzung und Verformung, was dazu führen kann, dass sich der Sitz von Turbinenschaufeln lockert und im Extremfall eine Turbine zerstört wird.

Herkömmlicherweise wird ein Teilabdruck von länglichen Ausnehmungen, insbesondere Nuten mittels Zahnabdruckmasse genommen und im Anschluss mittels Profilprojektoren vermessen.

Darüber hinaus ist aus der WO 2015/014652 A1 ein Verfahren zur dreidimensionalen Erfassung eines länglichen Innenraumes mittels einer Lichtlinie bekannt.

Die US 2015/0308813 A1 offenbart eine Vorrichtung zum berührungslosen Vermessen schwalbenschwanzartiger Ausbuchtungen eines Turbinenrads mittels einer Lasereinrichtung.

Ein Verfahren zum Vermessen von Querrillen einer Rohrverbindung ist aus der WO 2012/069154 A1 bekannt.

Aus der EP 1 416 122 A2 sind eine Vorrichtung und ein Verfahren zum Messen von Durchmessern länglicher Aussparungen eines Gasturbinenrotors durch Aufspannen zweier Stifte bekannt.

Es ist Aufgabe der Erfindung eine 3D-Messvorrichtung und ein Verfahren zur dreidimensionalen Erfassung von länglichen Ausnehmungen, insbesondere Nuten, insbesondere Rotornuten, derart bereit zu stellen, dass eine Inspektion und eine dreidimensionale (3D-) Vermessung von länglichen Ausnehmungen, insbesondere Nuten, insbesondere deren geraden Verläufe, einfach, wirksam, sicher, wiederholbar und zuverlässig ausführbar ist.

Eine Ausnehmung ist insbesondere ein räumlicher Bereich eines Materialkörpers, in dem kein Material des Körpers vorhanden ist.

Die Aufgabe wird durch eine 3D-Messvorrichtung gemäß dem Hauptanspruch 1 und ein 3D-Messverfahren gemäß dem Nebenanspruch 4 gelöst.

Gemäß einem ersten Aspekt wird eine 3D-Messvorrichtung zur dreidimensionalen Erfassung von länglichen Ausnehmungen, insbesondere Nuten, insbesondere Rotornuten, vorgeschlagen, wobei ein Aufbau zur Positionierung und Befestigung an einer Nut eines Körpers, insbesondere eines Rotors und ein mit dem Aufbau verbundener und zur Nut ausrichtbarer 3D-Messkopf zur jeweiligen 3D-Oberflächenmessung der Nut verwendet werden.

Der Aufbau umfasst eine Klemmeinrichtung mit Klemmbacken, welche jeweils mit einer Endoberfläche zweier Stirnseiten der länglichen Ausnehmung mechanisch kontaktierbar und lösbar befestigbar sind. Der Aufbau weist eine entlang einer zweiten Längsachse sich räumlich erstreckende und mit dieser parallel zu der ersten Längsachse ausrichtbare Aussparung aufweisende und die Längliche Ausnehmung einrahmende Platte auf, die mit einer Zentriereinrichtung und der Klemmeinrichtung fest verbunden ist, wobei die Zentriereinrichtung mindestens eine Zentrierbacke aufweist.

Gemäß einem zweiten Aspekt wird ein Verfahren zur dreidimensionalen Erfassung von länglichen Ausnehmungen, insbesondere Nuten, insbesondere Rotornuten, nach Anspruch 4 vorgeschlagen. Die erfindungsgemäße 3D-Messvorrichtung zur Vermessung von länglichen Ausnehmungen, insbesondere Nuten beispielsweise von Gasturbinen beruht auf einer Kombination eines 3D-Scankopfes, der ebenso als 3D-Messkopf bezeichnet werden kann, mit einem Aufbau, der ebenso als Werkzeugplattform bezeichnet werden kann.

Mittels der Erfindung kann vorteilhafterweise ein Messvorgang schnell und automatisiert ausgeführt werden, wobei eine Nut beispielsweise innerhalb einer Minute vermessen werden kann. Weiterhin kann eine Vermessung einer kompletten Nutoberfläche entlang der vollständigen Nutlänge ausgeführt werden. Eine hochgenaue Vermessung insbesondere in einem Bereich bis zu 20pm ist möglich. Ein Verschleiß und eine Verformung von länglichen Ausnehmungen, insbesondere Nuten kann digitalisiert und einfach dokumentiert werden.

Weitere vorteilhafte Ausgestaltungen werden in Verbindung mit den Unteransprüchen beansprucht.

Gemäß einer vorteilhaften Ausgestaltung kann eine Rechnereinrichtung zur Verarbeitung und 3D-Rekonstruktion der mittels des 3D-Messkopfes erzeugten 3D-Daten der Nut zu einem 3D-Modell der Nut bereitgestellt sein.

Gemäß einer weiteren vorteilhaften Ausgestaltung kann die Rechnereinrichtung zur Analyse der 3D-Messdaten mittels Vergleichen des 3D-Modells mit einem Computer-Admitted-Design-Modell der Nut geschaffen sein.

Gemäß einer weiteren vorteilhaften Ausgestaltung kann mittels einer Rechnereinrichtung ein Verarbeiten und 3D-Rekonstruieren der mittels des 3D-Messkopfes erzeugten 3D-Daten zu einem 3D-Modell der Nut ausgeführt werden.

Gemäß einer weiteren vorteilhaften Ausgestaltung kann mittels der Rechnereinrichtung eine Analyse der 3D-Messdaten mittels Vergleichen des 3D-Modells mit einem CAD-Modell der Nut ausgeführt werden.

Gemäß einer weiteren vorteilhaften Ausgestaltung kann mittels der Rechnereinrichtung ein Anzeigen von Modellen der Nut insbesondere an einem Bildschirm ausgeführt werden.

Gemäß einer weiteren vorteilhaften Ausgestaltung kann ein Lösen des Aufbaus zusammen mit dem 3D-Messkopf von der Nut und ein Positionieren und Befestigen an einer weiteren Nut ausgeführt werden.

Die Erfindung wird anhand von Ausführungsbeispielen in Verbindung mit den Figuren näher beschrieben. Es zeigen:
- Fig. 1: eine mögliche Ausgestaltung des 3D-Messkopfes als die eines sogenannten mehrdirektionalen Ein-Chip-Triangulationssystems;
- Fig. 2: eine Ausgestaltung einer Werkzeugplattform;
- Fig. 3: ein Ausführungsbeispiel einer erfindungsgemäßen 3D-Messvorrichtung;
- Fig. 4: ein Ausführungsbeispiel eines erfindungsgemäßen Verfahrens;
- Fig. 5: eine Darstellung zu einem weiteren Ausführungsbeispiel eines erfindungsgemäßen Verfahrens;
- Fig. 6: ein weiteres Ausführungsbeispiel einer 3D-Messvorrichtung;
- Fig. 7: eine Anzeige einer Rechnereinrichtung.

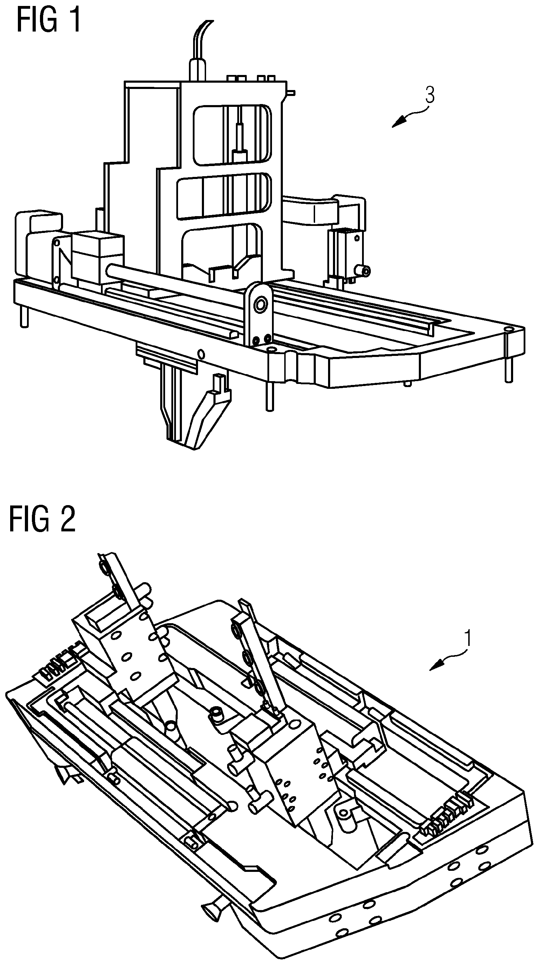

Fig. 1 zeigt ein Ausführungsbeispiel eines 3D-Messkopfes 3. Dabei ist der 3D-Messkopf 3, der ebenso als 3D-Scankopf bezeichnet werden kann, mit einer Linearführung ausgestaltet. Fig. 1 zeigt den 3D-Messkopf 3 zur mittels Triangulation ausgeführten 3D-Messung eines, insbesondere eine Ausnehmung aufweisenden, Objektes, insbesondere einer Nut, einer Spalte oder einer Röhre, wobei zwischen einer einzigen Erfassungseinrichtung und dem Objekt eine eine Mehrzahl getrennter optische Wege erzeugende optischen Einrichtung positioniert ist, die ein einziges ohne optische Einrichtung ursprüngliches Sichtfeld der Erfassungseinrichtung in eine Mehrzahl von Untersichtfeldern aufteilt und die einzige Erfassungseinrichtung die Untersichtfelder getrennt erfasst.

Eine Ausnehmung ist insbesondere ein räumlicher Bereich eines Materialkörpers, in dem kein Material des Körpers vorhanden ist.

Der 3D-Messkopf 3 kann ebenso als "Multi directional single chip triangulation system" also als "Mehrrichtungs-Einzelchip-Triangulationssystem" oder als "optischer 3D Messtaster" bezeichnet werden. Die Triangulation kann insbesondere eine aktive Triangulation sein, die beispielsweise Laserlinienverformungen zur Berechnung verwendet.

Zur aktiven Triangulation kann mindestens eine Projektionseinrichtung ausgebildet sein, die in jedem Untersichtfeld ein Muster erzeugt, das auf das Objekt projizierbar ist.

Zur passiven Triangulation kann für jedes Untersichtfeld in der einzigen Erfassungseinrichtung ein Stereo-System ausgebildet sein, mittels dem jeweils das Objekt erfassbar ist.

Fig. 2 zeigt ein Ausführungsbeispiel eines Aufbaus 1, der ebenso als Werkzeugplattform bezeichnet werden kann. Der Aufbau eignet sich vorteilhaft zur Aufnahme eines 3D-Messkopfes 3 gemäß Fig. 1. Gemäß einem Aspekt wird ein Aufbau zur Positionierung und Befestigung eines an den Aufbau befestigbaren Werkzeuges an einer sich entlang einer ersten Längsachse räumlich erstreckenden, insbesondere einen Öffnungswinkel und an zwei Stirnseiten vier Endoberflächen aufweisenden länglichen Ausnehmung, insbesondere Nut, insbesondere eines Rotors, vorgeschlagen, wobei der Aufbau eine entlang einer zweiten Längsachse sich räumlich erstreckende und mit dieser parallel zu der ersten Längsachse ausrichtbare, eine Aussparung aufweisende und die längliche Ausnehmung einrahmende Platte aufweist, die mit einer Zentriereinrichtung und einer Klemmeinrichtung fest verbunden ist, wobei die Zentriereinrichtung mindestens eine Zentrierbacke aufweist. Diese ist beispielsweise in einem Querschnitt zu der zweiten Längsachse ein einen Öffnungswinkel der länglichen Ausnehmung nachbildender Keil, der in der Aussparung entlang der zweiten Längsachse und beispielsweise lotrecht zur Platte in die sowie aus der länglichen Ausnehmung, insbesondere Nut, bewegbar ist, wobei die Klemmeinrichtung auf der der länglichen Ausnehmung zugewandten Seite der Platte Klemmbacken aufweist, die jeweils entlang der zweiten Längsachse bewegbar und mit einer der, insbesondere vier, Endoberflächen der zwei Stirnseiten der länglichen Ausnehmung, insbesondere Nut, mechanisch kontaktierbar und lösbar befestigbar sind.

Eine Aussparung ist insbesondere ein räumlicher Bereich eines Materialkörpers, in dem kein Material des Körpers vorhanden ist. Die Aussparung kann als durchgängige Öffnung erzeugt sein.

Die mindestens eine Zentrierbacke kann sich in einem Querschnitt zu der zweiten Längsachse über den Verlauf der länglichen Ausnehmung in einem Querschnitt zu der ersten Längsachse räumlich hinaus erstrecken und in die längliche Ausnehmung klemmbar sein. Die Zentrierbacken können sich in Richtung zu der länglichen Ausnehmung im Querschnitt verjüngen.

Es können beispielsweise zwei einen Öffnungswinkel der länglichen Ausnehmung entsprechende Keile erzeugende Zentrierbacken und vier Klemmbacken geschaffen sind.

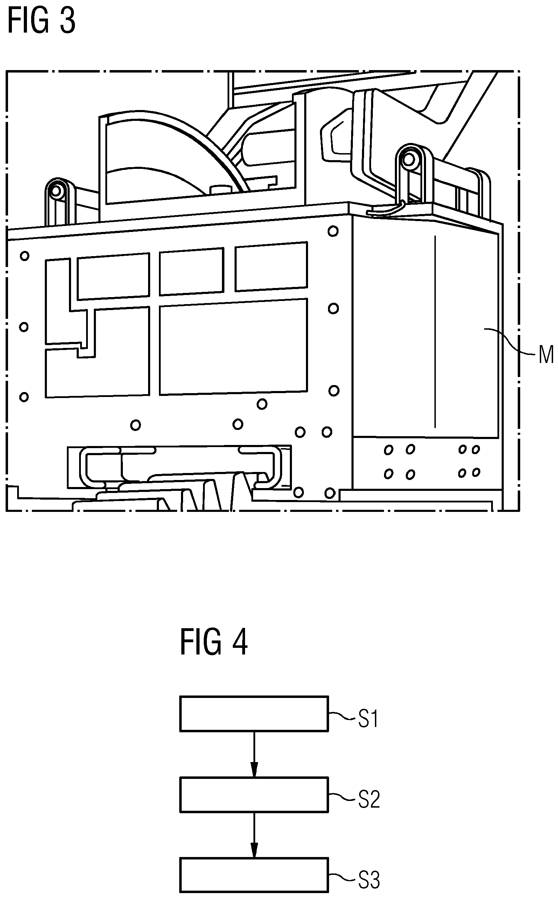

Es wird ein Bearbeitungsaufbau für längliche Ausnehmungen, insbesondere Nuten, insbesondere für Gasturbinen-Rotornuten, als eine mechanische Basis für die Anwendung verschiedener Werkzeuge vorgeschlagen. Dieser Bearbeitungsaufbau weist insbesondere eine Zentrierungs- und eine Klemmeinrichtung aus. Fig. 3 zeigt ein Ausführungsbeispiel einer erfindungsgemäßen 3D-Messvorrichtung M. Fig. 3 zeigt einen vollständigen Scanner. Dabei ist ein 3D-Messkopf 3 gemäß Figur 1 mit einem Aufbau 1 gemäß Fig. 2 verbunden.

Fig. 4 zeigt ein Ausführungsbeispiel eines erfindungsgemäßen Verfahrens. Mit einem ersten Schritt S1 wird ein 3D-Messkopf linear beweglich mit dem Aufbau derart verbunden, dass in einem zweiten Schritt S2 der 3D-Messkopf durch die länglichen Ausnehmungen beispielsweise die Nuten bewegt und gemessen werden kann. Mit einem dritten Schritt S3 werden die entstehenden Messdaten mittels einer entsprechenden Software zu einem 3D-Modell der abgetasteten Nut zusammengesetzt. In einem Unterschritt werden in diesem 3D-Modell bestimmte Messgrößen, beispielsweise Abstände und Abnutzungen, ermittelt. Der hierfür notwendige Computer oder die hierfür notwendige Rechnereinrichtung kann in den Gesamtaufbau integriert werden, um unabhängig von zusätzlicher Hardware zu sein. Die Rechnereinrichtung weist vorteilhaft eine Prozessoreinheit und eine Speichereinrichtung zum Speichern von 3D-Modellen auf.

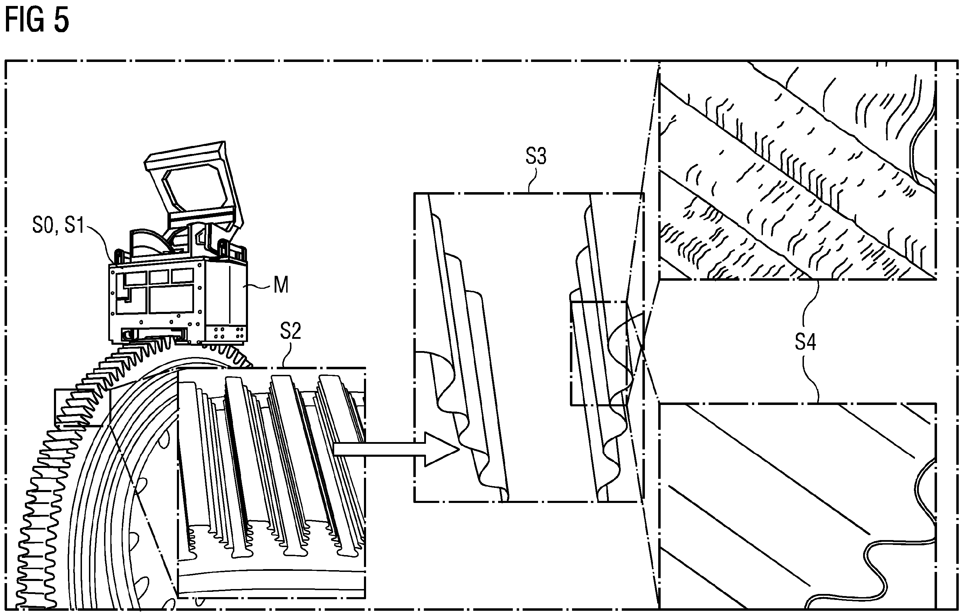

Fig. 5 zeigt eine Darstellung zu einem weiteren Ausführungsbeispiel eines erfindungsgemäßen Verfahrens. Es erfolgen ebenso gemäß Fig. 4 die ersten beiden Schritte S1 und S2, wobei vorher noch ein Schritt S0 eines Positionieren und Befestigen des Aufbaus an einer länglichen Ausnehmung insbesondere Nut eines Körpers, hier eines Gasturbinenrotors ausgeführt wurde. Schritte S0 und S1 können gleichzeitig ausgeführt werden, wenn der Aufbau 1 zusammen mit dem 3D-Messkopf 3 in Ausgestaltung der erfindungsgemäßen 3D-Messvorrichtung M an der Nut oder auf dem Nuten aufweisenden Körper positioniert und befestigt wird. Fig. 5 stellt den zweiten Schritt S2 des dreidimensionalen Abtastens der Oberfläche der Nut mittels linearen Führens des 3D-Messkopfes entlang der Längsachse der Nut dar. Fig. 5 veranschaulicht die weiteren Arbeitsschritte, wobei ein mittels einer Rechnereinrichtung ausgeführtes Verarbeiten und 3D-Rekonstruieren der mittels des 3D-Messkopfes erzeugten 3D-Daten zu einem 3D-Modell der Nut als Schritt S3 angegeben ist. Fig. 5 zeigt zudem, dass mittels der Rechnereinrichtung eine Analyse der 3D-Messdaten, insbesondere mittels Vergleichens des 3D-Modells mit einem CAD-Modell der Nut in einem Schritt S4 ausgeführt wird. Dabei ist ein Idealnutenverlauf im Unterschied zu einem Verlauf einer abgenutzten Nut mit einer beeinträchtigten Oberfläche dargestellt. Fig. 5 zeigt die Arbeitsschritte S0 bis S4 einer LASER basierten kompletten 3D-Konturmessung von Gasturbinenrotornuten zur Analyse einer Beanspruchung von länglichen Ausnehmungen, insbesondere Nuten. Es können Genauigkeiten bis circa 20pm bewirkt werden. Fig. 5 zeigt eine 3D-Messvorrichtung M als mobile und komplett autarke Scaneinheit aufweisend einen 3D-Scankopf, eine integrierte Rechnereinrichtung zur automatischen Analyse und Datenspeicherung.

Es kann nach einem ersten Schritt S1 eines Ausrichtens der 3D-Messvorrichtung M innerhalb der Nut mittels der Werkzeugplattform, nach einem zweiten Schritt S2 einer Linearbewegung des 3D-Messkopfes entlang der Nut zur Datenaufnahme und nach einem dritten Schritt S3 der Datenauswertung zur Berechnung von Messgrößen, insbesondere Längen, in einem abschließenden Schritt ein Lösen der 3D-Messvorrichtung M von der vermessenen Nut und ein Wiederholen des Vorgehens an der nächsten zu vermessenden Nut ausgeführt werden.

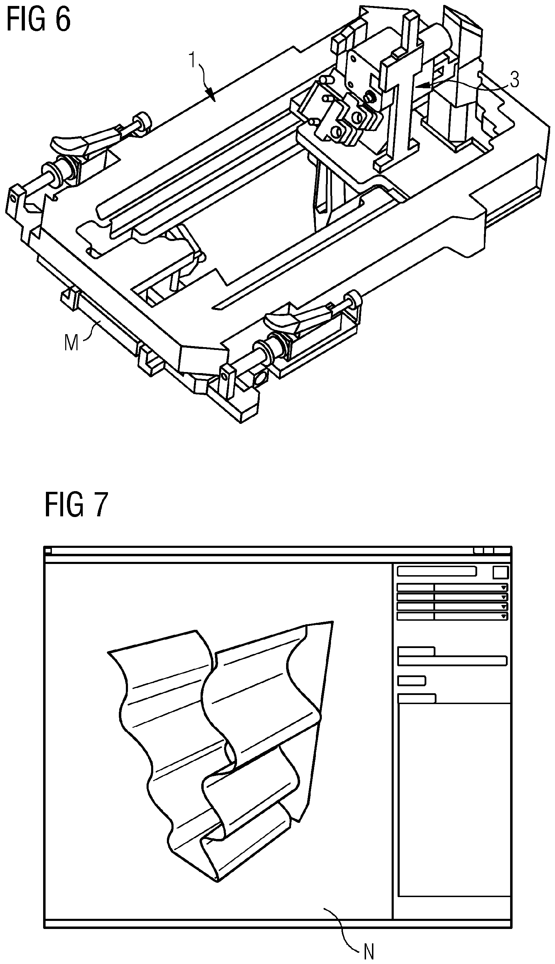

Fig. 6 zeigt ein weiteres Ausführungsbeispiel einer 3D-Messvorrichtung M. Diese leichte Variante der 3D-Messvorrichtung M weist keine integrierte Rechnereinrichtung auf, wobei zudem der Aufbau 1 zusammen mit dem 3D-Messkopf 3 lediglich mittels rein mechanischer Komponenten betrieben wird.

Fig. 7 zeigt eine Anzeige einer Rechnereinrichtung. Die Anzeige zeigt die Darstellung eines berechneten 3D-Modells einer tatsächlichen länglichen Ausnehmung in Ausgestaltung einer Nut N, die nach einer Abnutzung abgetastet und gemessen wurde.

## Patentansprüche

1. 3D-Messvorrichtung (M) zur dreidimensionalen Erfassung von länglichen Ausnehmungen,
insbesondere Nuten,
insbesondere Rotornuten,
mit einem Aufbau (1) zur Positionierung und Befestigung an einer länglichen Ausnehmung eines Körpers,
insbesondere eines Rotors und mit einem mit dem Aufbau verbundenen und zur länglichen Ausnehmung ausrichtbaren 3D-Messkopf (3) zur jeweiligen 3D-Oberflächenvermessung der länglichen Ausnehmung,
**gekennzeichnet durch**
eine Klemmeinrichtung des Aufbaus (1) mit Klemmbacken, welche jeweils mit einer Endoberfläche zweier Stirnseiten der länglichen Ausnehmung mechanisch kontaktierbar und lösbar befestigbar sind,
wobei der Aufbau eine entlang einer zweiten Längsachse sich räumlich erstreckende und mit dieser parallel zu der ersten Längsachse ausrichtbare Aussparung aufweisende und die längliche Ausnehmung einrahmende Platte aufweist,
die mit einer Zentriereinrichtung und der Klemmeinrichtung fest verbunden ist,
wobei die Zentriereinrichtung mindestens eine Zentrierbacke aufweist.

2. 3D-Messvorrichtung (M) gemäß Anspruch 1,
**gekennzeichnet durch** eine Rechnereinrichtung zur Verarbeitung und 3D-Rekonstruktion der mittels des 3D-Messkopfes erzeugten 3D-Daten der länglichen Ausnehmung zu einem 3D-Modell der länglichen Ausnehmung.

3. 3D-Messvorrichtung (M) gemäß Anspruch 2,
**gekennzeichnet durch** die Rechnereinrichtung zur Analyse der 3D-Messdaten mittels Vergleichen des 3D-Modells mit einem CAD-(Computer-Admitted- Design-) Modell der länglichen Ausnehmung.

4. Verfahren zur dreidimensionalen Erfassung von länglichen Ausnehmungen, insbesondere Nuten, insbesondere Rotornuten, **gekennzeichnet durch**
(S0;S1) Positionieren und Befestigen eines Aufbaus nach Anspruch 1 an einer länglichen Ausnehmung eines Körpers, insbesondere eines Rotors, durch mechanisches Kontaktieren von Klemmbacken einer Klemmeinrichtung des Aufbaus (1) mit jeweiligen Endoberflächen zweier Stirnseiten der länglichen Ausnehmung, wobei mit dem Aufbau ein 3D-Messkopf verbunden und zu der länglichen Ausnehmung zur jeweiligen 3D-Oberflächenvermessung ausgerichtet ist;
(S2) dreidimensionales Abtasten der Oberfläche der länglichen Ausnehmung mittels linearen Führens des 3D-Messkopfes entlang einer Längsachse der länglichen Ausnehmung.

5. Verfahren gemäß Anspruch 4, **gekennzeichnet durch** mittels einer Rechnereinrichtung ausgeführtes Verarbeiten und 3D-Rekonstruieren (S3) der mittels des 3D-Messkopfes erzeugten 3D-Daten zu einem 3D-Modell der länglichen Ausnehmung.

6. Verfahren gemäß Anspruch 5, **gekennzeichnet durch** mittels der Rechnereinrichtung ausgeführte Analyse (S4) der 3D-Messdaten mittels Vergleichen des 3D-Modells mit einem CAD-Modell der länglichen Ausnehmung.

7. Verfahren gemäß Anspruch 6, **gekennzeichnet durch** mittels der Rechnereinrichtung ausgeführte Anzeigen von Modellen der länglichen Ausnehmung.

8. Verfahren gemäß einem der vorhergehenden Ansprüche 1 bis 7, **gekennzeichnet durch** Lösen des Aufbaus (S5) zusammen mit dem 3D-Messkopf von der Nut und Positionieren und Befestigen an einer weiteren länglichen Ausnehmung.

## Claims

1. 3-D measuring device (M) for three-dimensionally sensing elongated cut-outs,
in particular grooves,
in particular rotor grooves,
comprising an assembly (1) for positioning and fixing on an elongated cut-out of a body,
in particular a rotor;
and comprising a 3-D measuring head (3) that is connected to the assembly and can be aligned with the elongated cut-out for the respective 3-D surface measurement of the elongated cut-out,
**characterized by**
a clamping device of the assembly (1) having clamping jaws,
which can each be contacted mechanically by and fixed detachably to an end surface of two end faces of the elongated recess,
wherein the assembly has a plate which has a cutout that extends three dimensionally along a second longitudinal axis and can be aligned with the latter parallel to the first longitudinal axis and which frames the elongated recess,
which is firmly connected to a centering device and the clamping device,
wherein the centering device has at least one centering jaw.

2. 3-D measuring device (M) according to Claim 1, **characterized by** a computer device for the processing and 3-D reconstruction of the 3-D data of the elongated cut-out generated by means of the 3-D measuring head to form a 3-D model of the elongated cut-out.

3. 3-D measuring device (M) according to Claim 2, **characterized by** the computer device for the analysis of the 3-D measured data by means of comparing the 3-D model with a CAD (computer-admitted-design) model of the elongated cut-out.

4. Method for three dimensionally sensing elongated cut-outs, in particular grooves, in particular rotor grooves, **characterized by**
(S0; S1) positioning and fixing an assembly according to Claim 1 on an elongated cut-out of a body, in particular a rotor, by mechanically contacting clamping jaws of a clamping device of the assembly (1) with respective end surfaces of two end faces of the elongated recess, wherein a 3D measuring head is connected to the assembly and aligned with the elongated recess for the respective 3D surface measurement;
(S2) three-dimensionally scanning the surface of the elongated cut-out by means of linearly guiding the 3-D measuring head along a longitudinal axis of the elongated cut-out.

5. Method according to Claim 4, **characterized by** the processing and 3-D reconstruction (S3) of the 3-D data generated by means of the 3-D measuring head to form a 3-D model of the elongated cut-out, performed by means of a computer device.

6. Method according to Claim 5, **characterized by** an analysis (S4) of the 3-D measured data by means of comparing the 3-D model with a CAD model of the elongated cut-out, performed by means of the computer device.

7. Method according to Claim 6, **characterized by** a display of models of the elongated cut-out, performed by means of the computer device.

8. Method according to one of the preceding Claims 1 to 7, **characterized by** detaching the assembly (S5) together with the 3-D measuring head from the groove and positioning and fixing on a further elongated cut-out.

## Revendications

1. Installation (M) de mesure en 3D pour la détection en trois dimensions d'évidements longitudinaux,
notamment de rainures,
notamment d'encoches de rotor,
comprenant une structure (1) de mise en position et de fixation à un creux oblong d'un corps,
notamment d'un rotor, et comprenant une tête (3) de mesure en 3D reliée à la structure et pouvant être orientée par rapport à l'évidement longitudinal pour la mesure respective de surfaces en 3D du creux longitudinal,
**caractérisée par**
un dispositif de serrage de la structure (1) ayant des mâchoires de serrage, qui chacune peuvent être mises en contact mécaniquement et être fixées de manière amovible à une surface d'extrémité de deux côtés frontaux du creux longitudinal,
dans laquelle la structure a une plaque s'étendant dans l'espace suivant un deuxième axe longitudinal et ayant un évidement pouvant être orienté avec celui-ci parallèlement au premier axe longitudinal et encadrant le creux longitudinal, qui est relié fixement à un dispositif de centrage et au dispositif de serrage, dans lequel le dispositif de centrage a au moins une mâchoire de centrage.

2. Installation (M) de mesure en 3D suivant la revendication 1, **caractérisée par** un dispositif informatique pour le traitement et la reconstruction en 3D des données en 3D produites au moyen de la tête de mesure en 3D du creux longitudinal suivant le modèle en 3D du creux longitudinal.

3. Installation (M) de mesure en 3D suivant la revendication 2, **caractérisée par** le dispositif informatique d'analyse des données de mesure en 3D au moyen d'une comparaison du modèle en 3D avec un modèle CAD (Computer-Admitted-Design) du creux longitudinal.

4. Procédé de détection tridimensionnel de creux oblongs, notamment de rainures, notamment d'encoches de rotor, **caractérisé par**
(S0 ; S1) la mise en position et la fixation d'une structure suivant la revendication 1 sur un creux oblong d'un corps, notamment d'un rotor, par mise en contact mécanique de mâchoires de serrage d'un dispositif de serrage de la structure (1) avec des surfaces respectives d'extrémité de deux côtés frontaux du creux oblong, dans lequel une tête de mesure en 3D est reliée à la structure et est orientée par rapport au creux oblong pour la mesure respective de surfaces en 3D ;
(S2) le balayage en trois dimensions de la surface du creux oblong au moyen d'un guidage linéaire de la tête de mesure en 3D suivant un axe longitudinal de l'évidement oblong.

5. Installation (M) de mesure en 3D suivant la revendication 4, **caractérisée par** un traitement réalisé au moyen d'un dispositif informatique et une reconstruction (S3) en 3D des données en 3D produites par la tête de mesure en 3D en un modèle en 3D de l'évidement oblong.

6. Installation (M) de mesure en 3D suivant la revendication 5, **caractérisée par** une analyse (S4), effectuée au moyen du dispositif informatique, des données de mesure en 3D au moyen d'une comparaison du modèle en 3D à un modèle CAD du creux oblong.

7. Installation (M) de mesure en 3D suivant la revendication 6, **caractérisée par** un affichage de modèles du creux oblong réalisé au moyen du dispositif informatique.

8. Procédé suivant l'une quelconque des revendications 1 à 7 précédentes, **caractérisé par** le détachement de la structure (S5) ensemble avec la tête de mesure en 3D de l'encoche et la mise en position et la fixation à un autre creux oblong.
